# EUROPEAN PATENT APPLICATION

(11) **EP 0 797 173 A1**
(43) Date of publication of application: **24.09.1997**
(21) Application number: 97200736.3
(22) Date of filing: 12.03.1997
(51) Int. Cl.: G06T 15/70, G06F 19/00, G06F 161/00, A63F 9/22

(54) **Virtual environment navigation and interaction apparatus and method**

(30) Priority: 22.03.1996 GB 9606129
(71) Applicant: Philips Electronics N.V., 5621 BA Eindhoven (NL)
(72) Inventor: Jetha, Zeenat, Redhill, Surry RH1 5HA (GB); Gallery, Richard David, Redhill, Surry RH1 5HA (GB)
(74) Representative: White, Andrew Gordon

(57) **Abstract**

In an interactive entertainment apparatus, where a user is presented with an image of a virtual environment and enabled to move the image viewpoint location and direction within the environment, a control arrangement is provided for movable or animated characters or artefacts appearing within the environment. Variables (distance, theta) are generated determining the separation between the viewpoint and artefact and divergence of viewpoint direction. Changes in one or both of these values initiates a controlled sequence (104.C/F) of poses adopted by all or part of the artefact.

## Description

The present invention relates to interactive entertainment apparatuses which present to a user an image of a computer-generated world or landscape (hereinafter referred to as a virtual environment) whilst providing user-operable means for navigating the virtual environment by controllably varying the location and/or direction of the user's viewpoint within the virtual world space. In particular, the present invention relates to such apparatuses which provide one or more computer-generated characters or features within the virtual environment (which characters or features are referred to hereinafter generally as artefacts) with which the user may wish to interact, and to a method for control of the same.

An example of such a system of artefacts (in this instance humanoid models) within a virtual environment is the Life Forms compositional tool developed by the Simon Fraser University, BC, Canada and described in "The Evolution of an Interface for Choreographers" by Tom W Calvert et al, Human Factors in Computer Systems: INTERCHI '93, Amsterdam 24-29 April 1993, Conference Proceedings pp 115-122. The Life Forms system is an interactive compositional tool which allows a user to animate a stored human figure representation with the limitations of a set of internally-held rules specifying permitted limb movements about joints. The figure appears in an environment defined as a planar surface across which the human figure can walk, run or dance. To simplify the control, certain repetitive actions such as the sequence of limb motions involved in walking or running, may be pre-stored and simply initiated as a sequence with a start and end time and/or starting and finishing locations within the virtual environment. Animation at different levels, from within a single joint of the figure, through limb and whole figure movement, to relative movements between two or more figures and movements in relation to features or co-ordinates of the virtual environment, are provided for.

In a development of the Life Forms system, such as to provide the characters with a degree of user-perceived autonomy, it was proposed to include rule-based processing, particularly the RTA production rule language developed at Philips Research Laboratories, Redhill, UK, in the control of the Life Forms humanoid representations, as is described in the paper "Building Behaviour-Based Animation Tools" by Sang Mah et al, submitted to IJCAI-95 Workshop on Entertainment and AI Life, August 21st 1995, Montreal CA. Whilst such developments may enhance the realism from the user's viewpoint, they can, however, greatly increase the complexity of a system in terms of how the user's reaction and inputs are recognised and classified, and the mechanisms necessary for doing so.

It is therefore an object of the present invention to provide an interactive system of movable or animated artefacts within a virtual environment wherein the user's actions and/or inputs are translated in a relatively simple manner to both initiate and alter the artefacts' actions and motions as perceived by the user.

It is a further object of the present invention to provide a method for user-initiated/-directed control of a movable artefact within a virtual environment which method is relatively simple to implement whilst providing good results in both simple and computationally complex systems.

In accordance with the present invention there is provided an interactive entertainment apparatus arranged to present an animated artefact within a virtual environment, the apparatus comprising:
a first data store holding data defining said virtual environment;
a second data store holding data defining the appearance of said artefact in two or more poses;
a processor coupled to selectively access data from said first and second data stores, said processor being arranged to generate an image of said virtual environment from a first viewpoint at a first location and in a first direction within said virtual environment, to determine a location for said artefact within said virtual environment and, if said artefact location is within the generated image, to further generate an image of said artefact in one of said poses at said location within the generated image of said virtual environment; and
user operable input means coupled to said processor and arranged to supply one or more predetermined signals thereto in response to user operation of said input means, wherein said processor is arranged to maintain a record of a second viewpoint location and an associated second viewpoint direction, to alter one or both thereof in dependence on the said one or more predetermined signals received from the user operable input means, and to periodically re-generate the image of said virtual environment from the location and in the direction specified at that time; characterised by comparator means coupled with said processor and operable to determine the relative positions within said virtual environment of said artefact and said second viewpoint and to generate an expression thereof, with the processor being arranged to select one from said two or more artefact poses in dependence on said generated expression.

Also in accordance with the present invention there is provided a method for user-controlled selection of stored poses available to a computer-generated artefact within a virtual environment generated by an interactive entertainment apparatus, wherein an image of said artefact from a first viewpoint within said virtual environment is generated and presented to a user and said user is enabled to alter at least one of the location of, and the direction of view from, a second viewpoint specified within the virtual environment; characterised in that the selection from available stored poses is made by said apparatus in dependence on an expression generated therein relating the relative locations within the virtual environment of said second viewpoint and said artefact.

The first and second viewpoints may be coincident such that the viewer is presented with the moving image of the second viewpoint as a mobile camera within the environment, or they may just share a common line of sight such as to provide a zoom facility with the second viewpoint representing the focal depth. Alternately, the user may have means for switching between first and second viewpoints which may, for example, be located such as to give "global" and "close-up" views respectively.

The generated expression may simply be an indication of the separation or distance between the movable (second) viewpoint and artefact in at least one direction within the virtual environment, such that the pose adopted by the artefact may alter as the viewpoint approaches or moves away from the artefact which may, for example, be a character in a game scenario. The generated expression may alternatively, or additionally, specify the angular separation at the viewpoint between the view direction and a line between the viewpoint and artefact in at least one plane within the virtual environment. This facility would allow for detection of the user looking to one side of the artefact, or above/below the artefact leading to initiation of particular artefact poses. A corresponding arrangement may also be provided in respect of a direction of view for the artefact.

Suitably, each of the two or more poses defined by data held in the second data store (which may, in an operational embodiment, be shared with the first data store provided appropriate memory management and access means are provided) is a starting pose comprising the first in a respective sequence of poses for each of which appearance-defining data is held in the second data store (together with data specifying the respective sequence), with the processor being arranged, following selection of one of the starting poses, to sequentially call up the data defining each successive artefact pose of the sequence and regenerate the image of the virtual environment with each newly-called pose. In operational use, this feature may be manifested as the selection from one of the stored poses initiating an animated sequence of artefact motions as presented to the user. In order to maintain the reactivity to user input, the processor may suitably be arranged to check, when stepping through the poses of a sequence, whether the generated expression has changed (for example whether the viewing direction has moved toward or away from the artefact) and, if so, to instead call up the data defining the starting pose indicated by the current generated expression.

The apparatus may further comprise a timer coupled to the processor (a counter coupled to the system clock may for example be used): by virtue of the timer, the processor may be controlled to select another of the two or more artefact poses (starting poses) if the generated expression has not changed by a predetermined factor (e.g distance and/or angle) during a period specified by the timer, which period might be controllably variable in response to input from the user-operable input means. The stored (starting) poses may be specified as a sequence, for example a series of faces with increasingly angry expressions, with the selection on expiration of a timed interval being made to follow the sequence.

The virtual environment may suitably be three-dimensional with the first and second viewpoint locations being defined in three dimensions and the second being movable in at least one (for example along a line in a horizontal plane at a fixed height) in response to signals from the user-operable input means: controllable movement of the viewpoint in two or three dimensions is of course preferred although it will be at the expense of greater required processor power. In a similar manner, the second viewpoint direction may be modified in response to user input, for example by varying one or more defined coordinates such as angular rotation about horizontal and/or vertical axes through the viewpoint.

In a more computationally complex system, a further data store (which may be a part of the second data store) may be provided to hold a population of rules governing selection of the data defining the artefact appearance (the poses), with the population of rules controlling operation of the processor to select one, or sequentially select ones, of the poses in dependence on signals received from the user-operable input means. With such a population controlling aspects of the artefact's behaviour, the "realism" may be enhanced by, for example, having rules varying a timer setting (as described above) or selectively specifying sequences of motions in dependence on how long the interactive session has been going on, what choices have been made by the user previously and so forth. Alternatively, or additionally, audio signal generation means may be provided, coupled with the processor and controlled thereby to generate a predetermined audio output in response to selection of one, or predetermined ones, of the stored poses. Ultimately, however, the triggering for such a complex behaviour or additional features is still due to the user's movements of the second viewpoint relative to the artefact, thus providing a relatively simple to implement technique applicable to systems at different levels of complexity.

Further features and advantages are defined in the attached claims, to which reference should now be made, and will become apparent from reading of the following description of preferred embodiments of the present invention, given by way of example only, with reference to the accompanying drawings, in which:
Figure 1 is a block schematic diagram of a rule-based processor and animation suite assembly embodying the present invention;
Figure 2 illustrates controls provided to a user for manipulation of viewpoint location and direction; and
Figure 3 is a flow chart illustrating operation of a part of the system of Figure 1.

The animation suite is based around a graphics engine 10 having an internal processor and coupled to stores 12 and 14 respectively holding data defining the virtual environment and each of a number of poses, or sequences of poses, for one or more artefacts, for example animated characters within the virtual environment. It should be noted that, as used herein and in the following claims, a "pose" may relate to the positioning of only a part of a compound animated body with the other limbs being controlled independently. Thus a sequence of poses may simply define a humanoid model nodding its head, while movement of the arms and legs is controlled by other means.

Additional mass storage 16 is further provided (which may, as shown, comprise a CD-ROM) which is arranged, under control of the graphics engine 10, to download additional environment or pose data to the stores 12 or 14 via respective buses 18,20. The graphics engine 10 assembles a current model of the virtual environment and the characters (posed artefacts) therein, determines a current viewpoint within the virtual environment, and generates image data representing the view of the virtual environment. This image data is output to display driver circuit 22 which renders an image for display by display means 24. In a relatively simple embodiment, display means 24 may simply comprise a display screen, such as a cathode ray tube, or it may be more complex in the form of a stereoscopic head-mounted display (HMD) unit. Note that where an HMD unit is used for display and it is required to provide three-dimensional imaging of the virtual environment, the graphics engine 10 is preferably configured to generate binocular views of the virtual environment.

An optional audio system is shown within dashed outline 26, the system comprising an audio signal generator 28 which is triggered by the graphics engine 10 in response to selection of, for example, particular poses from pose store 14. Audio signal generator 28 may have the capability to generate audio signals directly or may call up the basic or additional data from an audio store 30. The output from the audio signal generator is passed to an audio playback stage 32 which may simply comprise an audio amplifier and speakers accompanying the display or may provide stereo sound via headphones in combination with binocular vision in an HMD used as display device 24. As will be recognised, simple read only memory capability is required for the audio store 30 and, as such, audio store 30 may be provided as a part of mass store 16.

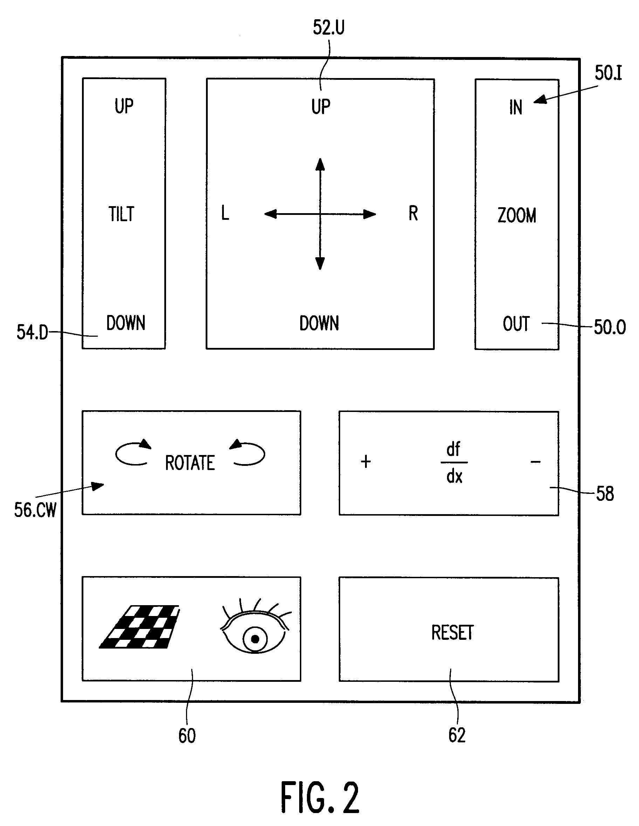

A user-operable input device (UID) 34 is provided for the input of movement commands (for the viewpoint location and direction) to the graphics engine 10. Figure 2 illustrates the controls provided to the user on the UID 34 for movement of the viewpoint. These controls may be physically embodied in a hardware unit provided to the user and coupled to the graphics engine by a direct or infrared link or the control panel shown may be displayed, perhaps by display means 24, on a screen having touch-screen capability or a user-movable cursor for selection. Control 50 adjusts the camera zoom inwards (towards that part of the virtual environment currently being viewed) by depression of the button at 50.I or outwards by depressing the button at 50.O. The camera zoom may be used as a further trigger to the selection operation, with the selection being based on where the camera is focusing rather than where the camera is located. This corresponds to having a pair of viewpoints with a common line of sight, one of which corresponds to the focal depth (and taken as the cue for selection) and one corresponding to the camera location.

Button 52 controls panning, that is to say changing the direction of view whilst maintaining the same viewpoint location. The panning control 52 is a four-way control with the user being enabled to pan up (depressing 52.U), down (52.D), left (52.L) or right (52.R). Control 54 controls up (54.U) and down (54.D) tilting of the viewpoint direction. Control 56 initiates circling (rotating about a vertical axis through the viewpoint location) in either a clockwise, as shown by depressing the button at the side indicated by 56.CW or anti-clockwise by depressing the right hand side of the button towards the centre of the control panel. The zoom (50), pan (52), tilt (54) and circle (56) buttons are all in the form of potentiometers, that is to say the closer to the edge of the buttons they are depressed, the faster the change in viewpoint location and/or direction occurs. Changes in the range of speeds assigned per one of the buttons 50,52,54,56 may be made by operation of speed change control 58.

A further control is the remote view button 60 which substitutes the presently displayed image taken from the movable viewpoint location with a broader view of the virtual environment from a remote viewpoint, suitably with markers for the movable viewpoint location and the or each artefact and an indicator for the line or sight or field of view from the movable viewpoint, such as to allow the user to orient themselves. A re-set button 62 is also provided on operation of which the movable viewpoint location and direction and respective artefact locations revert to a starting position.

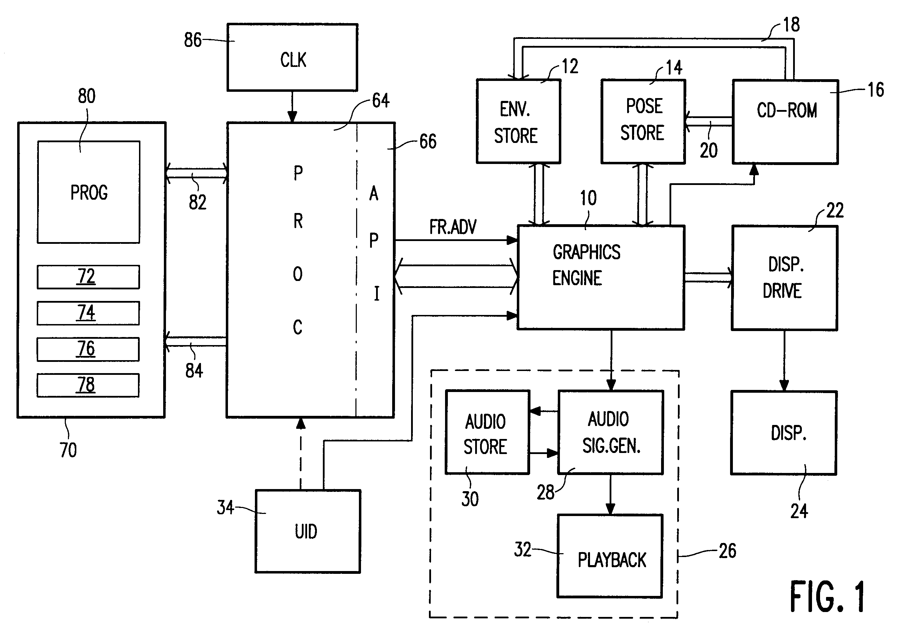

Returning to Figure 1, the system suitably further comprises a rule-based processor 64 (optionally with an input from UID 34) coupled with the processor of the graphics engine 10 of the animation suite via a suitable application programming interface (API) 66 and via a bus 68. The processor 64 may take over all control functions previously ascribed to the graphics engine 10 leaving that clear to carry out more complex scene rendering. The processor 64 has associated with it a random access memory (RAM) 70 coupled via data and address buses 82,84. RAM 70 provides a number of discrete storage areas 72,74,76,78,80. The first of these areas 72 holds a table containing details of the various elements in a compiled population of RTA rules operated by the processor 64 in conjunction with memory 70. The additional storage areas are provided for tables of rule propagate functions 74, future element state changes 76, an event stack 78, and a program store 80. The program store 80 holds the set of rules which go to make up a rule-based agent or population of rule-based agents in known manner. Additional memory capability for processor 64 may be provided by mass store 16 coupled to the processor by a further data bus (not shown). The further functions and utilisation of the data from the different areas of memory 70 is described in, for example, our pending International Patent Application PCT/IB95/00516. These functions and operations are not germane to operation of the present invention and will not be further described.

A clock source 86 provides a further input to the processor 64 and, through an internal counter, provides a timer for various of the motions sequences described below.

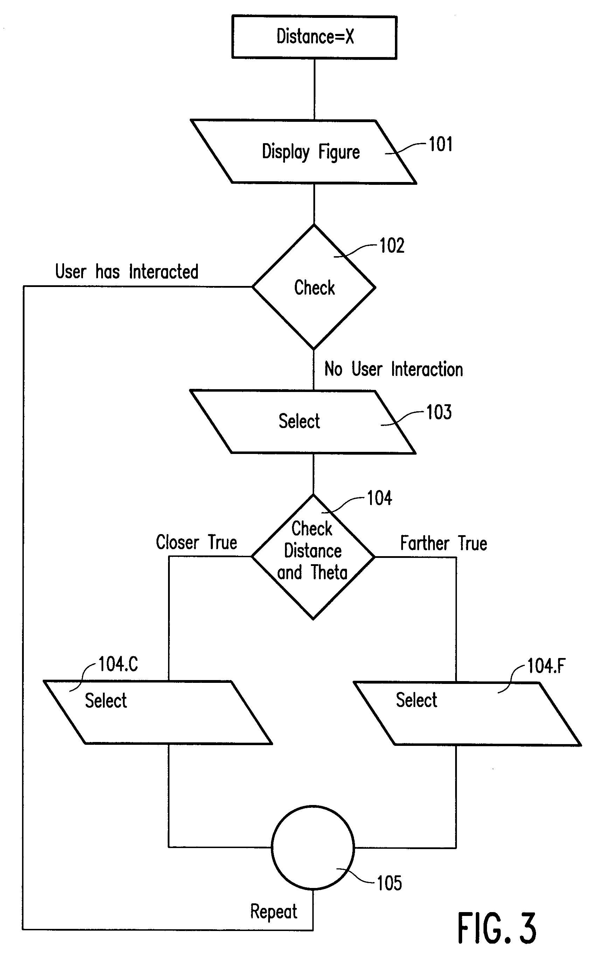

Figure 3 is a flow chart illustrating the steps taken by the system to determine how the artefact should respond to user input. The various stages are as follows:

### Display Figure (Step 101):

In operation, a series of calls via API 66 (Figure 1) are made to display the artefact: the artefact has to be created (for example by the calling up of a starting pose), displayed on the display 24 and given an initial sequence of motions or actions. The sequence mode has to be set, that is to say, whether the sequence of artefact actions should loop or just stop upon completion. The artefact also has to be positioned on the stage, that is to say at a particular point within the virtual environment.

### Check for Interaction (Step 102):

In the data file holding control functions for movement of the viewpoint location and direction, which data file may be held in for example ROM 70 or store 12, the command: get_theta_and_distance (distance,theta) is suitably included as a routine calculating two values: the distance between the camera eye (viewpoint) and the artefact (i.e how close is the user to the generated figure), and the angle between what the camera is looking at and the figure (is the user actually looking at the figure). These calculations are stored in the variables distance and theta respectively. Both variables theta and distance are continuously updated by the simulation program running within the graphics engine 10 or the general processor 64. The RTA rules from ROM 70, in the meantime, are checking the values stored for the variables distance and theta and comparing them to their previous value. If the difference between the previous distance and the one currently evaluated is zero or less than a predetermined threshold, then the user is taken not to have moved sufficiently and the system will then loop through a series of behaviours, as will be described below. The same comparator operation of the graphics engine or processor may also be applied to theta. If there is a change in the generated expression, namely in the value of theta, or distance, then the RTA rules at "the brain" of the computer agent knows that the camera eye (or user) has changed its position, and hence it determines if the user has moved closer or farther away.

### Select Follow-Me Animation (Step 103):

As long as the user does not respond to the artefact starting pose, i.e there is no appreciable change in the viewpoint location (camera eye position) then the figure shown by the artefact may become more and more emphatic in the way it mimes the user to follow him, until it finally gives up and starts crying. The list of behaviours that the figure goes through (the sequences of artefact motions) suitably comprises:
- Call user:: The artefact appears to use its hand to call user closer.
- Emphatic Call:: Calls user by gesturing with entire arm.
- Angry call:: Stomps feet and shakes hands.
- Annoyed:: Crosses arms, taps feet and waves to user to grab attention.
- Sad:: Cries after trying so hard.

The timing for moving from one to the next of these behaviours is controlled by the timer based on clock source 86, and the sequence may be interrupted at any point in response to user input.

### Check Distance and Theta: Further True (Step 104.F):

If the user has moved farther away in at least one direction within the virtual environment, then the figure animation must respond appropriately, or become more emphatic in calling the user to follow it. In this case, the figure appears to become more and more angry, and even cries. The behaviours that the figure goes through in this case are similar to these described above for lack of movement with an additional one at the end that is called Look_for_User, which is called if the user gets too far away, i.e the angular or spatial separation between the artefact and the viewpoint exceeds a predetermined threshold, which threshold may, as indicated previously, be variable. In response to selection of the Further True option, the behaviour sequence is as follows:
- Call user:: The artefact appears to use its hand to call user closer.
- Emphatic Call:: Calls user by gesturing with entire arm.
- Angry call:: Stomps feet and shakes hands.
- Annoyed:: Crosses arms, taps feet and waves to user to grab attention.
- Sad:: Cries after trying so hard.
- Look_for_User behaviour:: if the user is too far away, the artefact pose sequence selected shows the artefact shading its eye with hand and looking from side to side.

Note that these sequences may instead be implemented as trends, with for example oscillation between Annoyed and Sad prior to moving on to Look_For.

### Check Distance and Theta: Closer True (Step 104.C):

If the user has moved closer then the figure gets "happy". When the artefact and viewpoint are close enough (to within a predetermined distance) the artefact may start walking and leading the user to some destination. If, while the figure is walking, the distance between the user and figure becomes too great, then the figure stops and starts calling the user again. The additional artefact pose sequences required to illustrate such behaviour are:
- Happy:: The artefact claps if the user comes closer.
- Happier:: Jumps up and down.
- Walks:: If user close enough, then walks to the back area of the stage.

### Repeat (Step 105):

The procedure repeats again starting at Step 102.

In the above description, a process has been described for enabling interaction with an agent in a virtual world. A user's manipulation of a virtual camera is used to signal an agent as to the actions of that user and, as such, it provides an effectively realistic method for interaction which is relatively simple to implement. Whilst described as a feature of a dedicated graphics based system, it will be recognised that the process is applicable to all multimedia systems having means for modelling the environment and directing movement relative to the artefact. In an alternative to the stand-alone system, the artefact may serve as a guide to an on-line virtual environment which may be accessed by a number of users, or may be packaged with data defining the environment (in a language such as VRML 2.0) to be available for downloading to any platform supporting the language.

In the foregoing, from reading the present disclosure, other modifications and variations will be apparent to persons skilled in the art. Such modifications and variations may involve equivalent features and other features which are already known in the field of interactive graphical apparatuses and which may be used instead of or in addition to features already disclosed herein. Although claims have been formulated in this Application to particular combinations of features, it should be understood that the scope of the disclosure of the present application includes any and every novel feature or any novel combination of features disclosed herein either explicitly or implicitly and any generalisation thereof, whether or not it relates to the same invention as presently claimed in any Claim and whether or not it mitigates any or all of the same technical problems as does the present invention. The Applicants hereby give notice that new claims may be formulated to such features and/or combinations of such features during prosecution of the present application or of any further application derived therefrom.

## Claims

1. Interactive entertainment apparatus arranged to present an animated artefact within a virtual environment, the apparatus comprising:
a first data store holding data defining said virtual environment;
a second data store holding data defining the appearance of said artefact in two or more poses;
a processor coupled to selectively access data from said first and second data stores, said processor being arranged to generate an image of said virtual environment from a first viewpoint at a first location and in a first direction within said virtual environment, to determine a location for said artefact within said virtual environment and, if said artefact location is within the generated image, to further generate an image of said artefact in one of said poses at said location within the generated image of said virtual environment; and
user operable input means coupled to said processor and arranged to supply one or more predetermined signals thereto in response to user operation of said input means, wherein said processor is arranged to maintain a record of a second viewpoint location and an associated second viewpoint direction, to alter one or both thereof in dependence on the said one or more predetermined signals received from the user operable input means, and to periodically re-generate said image of said virtual environment from the location and in the direction specified for the first viewpoint at that time; characterised by comparator means coupled with said processor and operable to determine the relative positions within said virtual environment of said artefact and said second viewpoint and to generate an expression thereof, with the processor being arranged to select one from said two or more artefact poses in dependence on said generated expression.

2. Apparatus as claimed in Claim 1, wherein said first and second viewpoints are coincident.

3. Apparatus as claimed in Claim 1, wherein the first and second viewpoints share a common line of sight.

4. Apparatus as claimed in Claim 1, wherein the processor is controllable to generate said image from said first viewpoint and said second viewpoint with switching means for selecting therebetween.

5. Apparatus as claimed in Claim 1, wherein each of said two or more poses defined by data held in said second data store is a starting pose comprising the first in a respective sequence of poses for each of which appearance-defining data is also held in the second data store together with data specifying the respective sequence, and wherein said processor is arranged, following selection of one of said starting poses in dependence on said generated expression, to sequentially call up the data defining each successive artefact pose of the respective sequence and re-generate the image of the virtual environment with each new-called pose.

6. Apparatus as claimed in Claim 1, wherein said generated expression specifies the separation between the artefact and the second viewpoint in at least one direction within the virtual environment.

7. Apparatus as claimed in Claim 1, wherein said generated expression specifies the angular separation at said second viewpoint between the view direction and a line between said second viewpoint and said artefact in at least one plane within the virtual environment.

8. Apparatus as claimed in Claim 1, further comprising a timer coupled to said processor, whereby said processor is controlled to select another of said two or more artefact poses if said generated expression has not changed by at least a predetermined factor during a period specified by said timer.

9. Apparatus as claimed in Claim 8, wherein said two or more artefact poses are specified in at least one sequence, data defining said sequence being held in said second data store, wherein said processor selects the next pose of said sequence if said generated expression has not changed by at least said predetermined factor during said period specified by said timer.

10. Apparatus as claimed in Claim 1, wherein said virtual environment is a three-dimensional environment and said first and second viewpoint locations are defined in three dimensions within said virtual environment, wherein said processor is arranged to alter said second viewpoint location in at least one dimension within said virtual environment in response to one or more signals received from said user operable input means.

11. Apparatus as claimed in Claim 1, wherein said second data store holds a population of rules governing selection of data defining artefact appearance in said two or more poses, said population of rules controlling operation of said processor to select one, or sequentially select ones, of said two or more poses in dependence on signals received from said user operable input means.

12. A method for user-controlled selection of stored poses available to a computer-generated artefact within a virtual environment generated by an interactive entertainment apparatus, wherein an image of said artefact from a first viewpoint within said virtual environment is generated and presented to a user and said user is enabled to alter at least one of the location of, and the direction of view from, a second viewpoint specified with said virtual environment; characterised in that the selection from available stored poses is made by said apparatus in dependence on an expression generated therein relating the relative locations within the virtual environment of said second viewpoint and said artefact.

13. A method as claimed in Claim 12, wherein the selection from one of said stored poses initiates an animated sequence of artefact motions presented to said user.

14. A method as claimed in Claim 12, where a different one from the available stored artefact poses is selected and presented to the user if the generated expression has not changed by at least a predetermined factor during a predetermined period for display of an artefact pose.
